(19) **Europäisches Patentamt**

**European Patent Office**

**Office européen des brevets**

(11) **EP 1 258 716 A1**

(12) **EUROPÄISCHE PATENTANMELDUNG**

(43) Veröffentlichungstag:
**20.11.2002 Patentblatt 2002/47**

(51) Int Cl.⁷: **G01L 27/00**, G01L 11/00

(21) Anmeldenummer: **01810494.3**

(22) Anmeldetag: **16.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Esec Trading S.A.**
**6330 Cham (CH)**

(72) Erfinder: **Mannhart, Eugen**
**6330 Cham (CH)**

(74) Vertreter: **Falk, Urs, Dr.**
**Patentanwaltsbüro Dr. Urs Falk,**
**Eichholzweg 9A**
**6312 Steinhausen (CH)**

(54) **Drucksensor**

(57) Ein Drucksensor zur Messung eines Druckes p enthält eine in einem Körper (1) eingespannte Membrane (2) mit einer Vorderseite (3) und einer Rückseite (4). Die Rückseite (4) der Membrane (2) ist mit dem Druck p beaufschlagbar. Die Vorderseite (3) der Membrane (2) steht mit einem Kolben (7) in Wirkverbindung. Zusätzlich ist ein Kraftgeber (10) vorhanden, mit dem der Kolben (7) mit einer vorbestimmten Kraft beaufschlagbar ist. Zum Zweck einer Nacheichung lässt sich die Membrane (2) des Drucksensors mit dem Kraftgeber (10) unter genau definierten Bedingungen deformieren und das Ausgangssignal neu eichen. Anstelle des Kraftgebers kann auch ein Weggeber vorgesehen sein.

**Fig. 1**

**Beschreibung**

Die Erfindung betrifft einen Drucksensor der im Oberbegriff des Anspruchs 1 genannten Art.

Bei der Montage von Halbleiterchips werden die Halbleiterchips mit einem Epoxy-Klebstoff auf das Substrat geklebt. Dabei ist es erforderlich, eine genau bestimmte Menge an Klebstoff auf das Substrat aufzutragen. Das Auftragen des Klebstoffs erfolgt beispielsweise mit einer Dispensdüse, wie sie in der europäischen Patentanmeldung EP 928637 beschrieben ist. Der Klebstoff in der Dispensdüse wird mit einem Druckpuls beaufschlagt. Zur Steuerung des Druckpulses werden Drucksensoren eingesetzt.

Ein für solche Messungen geeigneter Drucksensor wird von der Firma Honeywell unter der Bezeichnung 22 PC Serie angeboten. Der Drucksensor besteht im wesentlichen aus einer in einem Körper eingespannten Membrane, deren Auslenkung gegenüber dem Körper gemessen wird. Dazu sind auf der Membrane Piezowiderstände aufgebracht. Die Drucksensoren gibt es in einer ersten Ausführung zur Messung eines Relativdruckes, bei der die Vorderseite der Membrane mit dem zu messenden Druck beaufschlagt wird, während die Rückseite der Membrane mit der Umgebungsluft in Kontakt ist. Die Drucksensoren gibt es auch in einer zweiten Ausführung zur Messung eines Absolutdruckes, bei der die Rückseite der Membrane gegenüber der Umgebungsluft luftdicht abgedichtet ist. Nachteilig bei diesen Sensoren ist, dass sowohl die Nulllinie als auch die Kennlinie im Laufe der Zeit ändern, was Nacheichungen in bestimmten Zeitabständen erfordert.

Der Erfindung liegt die Aufgabe zugrunde, einen Drucksensor vorzuschlagen, der sich auf einfache Weise eichen lässt.

Die genannte Aufgabe wird erfindungsgemäss gelöst durch die Merkmale der Ansprüche 1 oder 4.

Die Erfindung basiert auf der Erkenntnis, dass von der Firma Honeywell zu den obengenannten Drucksensoren verwandte Sensoren als Kraftsensoren unter den Serien FSG und FSL im Handel erhältlich sind. Bei diesen Kraftsensoren wird die zu messende Kraft über einen Kolben auf die Membrane übertragen. Ein solcher Kraftsensor wird nun einerseits um einen Kraftgeber oder einen Weggeber erweitert und andererseits so modifiziert, dass die dem Kolben abgewandte Seite der Membrane mit dem zu messenden Druck beaufschlagt werden kann. Im Normalbetrieb des Drucksensors kommt dem Kraftgeber bzw. Weggeber keine Funktion zu. Der Kraftgeber bzw. Weggeber dient nur für die Eichung des Drucksensors. Für die Eichung des Drucksensors wird die Membrane unter definierten Bedingungen deformiert und dann das Ausgangssignal des Drucksensors ermittelt. Die Deformation der Membrane erfolgt entweder unter Einwirkung einer vom Kraftgeber auf den Kolben ausgeübten, vorbestimmten Kraft oder durch eine Verschiebung des Kolbens in eine genau definierte Lage.

Der Drucksensor kann sowohl zur Messung eines Überdrucks als auch eines Unterdrucks bzw. Vakuum verwendet werden.

Nachfolgend werden Ausführungsbeispiele der Erfindung anhand der Zeichnung näher erläutert.

Es zeigen:

Fig. 1    ein erstes Ausführungsbeispiel eines erfindungsgemässen Drucksensors mit einem Kraftgeber, und

Fig. 2    ein zweites Ausführungsbeispiel eines erfindungsgemässen Drucksensors mit einem Weggeber.

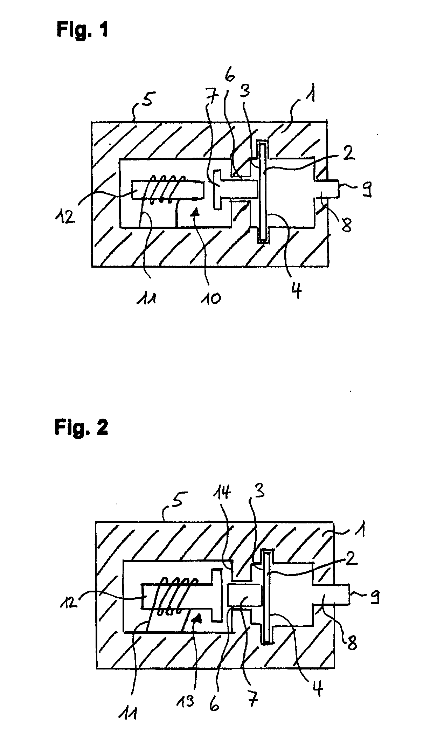

Die Fig. 1 zeigt im Schnitt ein erstes Ausführungsbeispiel eines erfindungsgemässen Drucksensors. Der Drucksensor weist einen Körper 1 auf, in den eine Membrane 2 eingespannt ist. Die Membrane 2 hat eine Vorderseite 3 und eine Rückseite 4. Der Körper 1 ist Teil eines Gehäuses 5 oder befindet sich im Innern eines Gehäuses 5. Das Gehäuse 5 weist eine erste Bohrung 6 auf, die einen Kolben 7 aufnimmt. Der Kolben 7 wirkt auf die Vorderseite 3 der Membrane 2 ein. Das Gehäuse 5 weist eine zweite Bohrung 8 mit einem als Druckanschluss ausgebildeten Nippel 9 auf. Die zweite Bohrung 8 befindet sich gegenüber der Rückseite 4 der Membrane 2, so dass der am Druckanschluss anliegende Druck p auf die Rückseite 4 der Membrane 2 einwirkt. Der Drucksensor weist zudem einen während der Eichung auf den Kolben 7 einwirkenden Kraftgeber 10 auf. Der Kraftgeber 10 ist vorzugsweise ein Elektromagnet mit einem von einer stromdurchflossenen Spule 11 angetriebenen, horizontal hin und her bewegbaren Magneten 12. Der Drucksensor liefert als Ausgangssignal eine vom Druck p abhängende elektrische Spannung $U(p)$.

Im Normalbetrieb des Drucksensors berührt der Magnet 12 den Kolben 7 nicht: Auf die Membrane 2 wirkt somit nur der am Druckanschluss anliegende Druck p ein.

Die Eichung oder Nacheichung des Drucksensors erfolgt gemäss den folgenden Schritten:

1. Die Zuführung des Druckes zum Druckanschluss wird unterbrochen, so dass am Druckanschluss der in der Umgebung herrschende Druck anliegt. Anschliessend wird das Ausgangssignal $U_0(p=0)$ des Drucksensors erfasst und gespeichert.

2. Der Kraftgeber 10 wird betätigt, so dass er eine vorbestimmte Kraft auf den Kolben 7 des Drucksensors ausübt. Dazu wird bei diesem Beispiel die Spule 11 des Elektromagneten mit einem vorbestimmten Strom $I_1$ beaufschlagt, infolgedessen der Magnet 12 mit einer dem Strom $I_1$ entsprechenden Kraft auf den Kolben 7 einwirkt. Anschliessend wird das Ausgangssignal $U_1(I_1)$ des Drucksensors erfasst und gespeichert.

Die Beziehung zwischen dem durch die Spule 11 fliessenden Strom $I_1$ und der vom Magneten 12 auf den Kolben einwirkenden Kraft $K_1(I_1)$ verändert sich im Laufe der Zeit nicht. Der Kraft $K_1(I_1)$ entspricht zudem ein bestimmter Druck $p_1(I_1) = K_1(I_1)/A$, wobei die Grösse A eine Konstante ist. Der bei Beaufschlagung des Kraftgebers 10 mit dem Strom $I_1$ auf den Kolben 7 des Drucksensors einwirkende Druck $p_1(I_1)$ muss deshalb nur ein einziges Mal während der Herstellung des Drucksensors gemessen und gespeichert werden. Zudem ist es so, dass die Beziehung $p_1(I_1)$ für alle Drucksensoren gleich ist. Somit kann im Schritt 2 dem Sensorsignal $U_1$ $(I_1)$ der zugehörige Druck $p_1$ zugeordnet werden und man erhält $U_1(p_1)$.

Falls die Kennlinie des Drucksensors im gewünschten Arbeitsbereich linear ist, d.h.

$$U(p) = U_0 + k*p \qquad (1)$$

wobei $U_0$ und k Konstanten sind, dann genügt es, die Eichung unter den beiden vorstehend genannten Bedingungen durchzuführen. Man erhält dann mit der Eichung den neuen Wert für die Konstante k zu

$$k = \frac{U_1(p_1) - U_0}{p_1} \qquad (2)$$

Falls die Kennlinie nicht-linear ist, dann wird der Schritt 2 mit einer Anzahl n verschiedener Ströme $I_1$ bis $I_n$ durchgeführt.

Als Kraftgeber kann auch eine Feder verwendet werden.

Die Fig. 2 zeigt im Schnitt ein zweites Ausführungsbeispiel des erfindungsgemässen Drucksensors, bei dem anstelle des Kraftgebers 10 ein Weggeber 13 vorhanden ist. Auch mit einem Weggeber ist es nämlich möglich, den Drucksensor zu einer beliebigen Zeit neu zu eichen. Der Weggeber 13 besteht beispielsweise aus dem durch die ortsfest angeordnete Spule 11 und den beweglichen Magneten 12 gebildeten Elektromagneten. Der Körper 1, oder der Elektromagnet, weist eine als Anschlag für den Magneten 12 dienende Fläche 14 auf. Mit dem Weggeber 13 wird der Kolben 7 für die Eichung des Drucksensors in eine vorbestimmte Lage gebracht und damit die Membrane 2 kontrolliert deformiert.

Auch hier berührt der Magnet 12 den Kolben 7 im Normalbetrieb des Drucksensors nicht: Auf die Membrane 2 wirkt somit nur der am Druckanschluss anliegende Druck p ein.

Die Eichung oder Nacheichung des Drucksensors erfolgt gemäss den folgenden Schritten:

1. Die Zuführung des Druckes zum Druckanschluss wird unterbrochen, so dass am Druckanschluss der in der Umgebung herrschende Druck anliegt. Anschliessend wird das Ausgangssignal $U_0(p=0)$ des Drucksensors erfasst und gespeichert.

2. Der Weggeber 13 wird betätigt, so dass über den Kolben 7 die Membrane 2 des Drucksensors in eine vorbestimmte Lage gebracht wird. Dazu wird bei diesem Beispiel die Spule 11 des Elektromagneten mit einem vorbestimmten Strom beaufschlagt, der ausreicht, um den Magneten 12 an der Fläche 14 zum Anschlag zu bringen. Anschliessend wird das Ausgangssignal $U_1$ des Drucksensors erfasst und gespeichert.

Beim Schritt 2 wird die Membrane 2 unter definierten Bedingungen gegenüber ihrer Ruhelage deformiert und in eine Lage L gebracht. Der Druck $p_1$, der zur Lage L gehört, muss nur einmal während des Herstellungsprozesses bestimmt werden. Dies kann beispielsweise so erfolgen, dass zunächst der Weggeber 13 betätigt und dann das Ausgangssignal $U_W$ des Drucksensors gespeichert wird. Anschliessend wird der Weggeber 13 zurückgesetzt und die Membrane 2 über den Druckanschluss mit einem zunehmenden Druck p beaufschlagt. Der Druck p wird erhöht, bis das Ausgangssignal des Drucksensors den Wert $U_W$ annimmt und dann als Druck $p_1$ gespeichert.

Nach dem Schritt 2 der Eichung kann also die Konstante k der Gleichung (1) wieder gemäss Gleichung (2) bestimmt werden.

Als Weggeber kann auch ein pneumatischer Antrieb verwendet werden.

Der auf die Rückseite 4 der Membrane 2 einwirkende Druck p kann ein Überdruck oder ein Unterdruck sein. D.h. der Drucksensor kann auch als Vakuumsensor verwendet werden.

## Patentansprüche

1. Drucksensor zur Messung eines Druckes p, mit einer in einem Körper (1) eingespannten Membrane (2) mit einer Vorderseite (3) und einer Rückseite (4), wobei die Rückseite (4) der Membrane (2) mit dem Druck p beaufschlagbar ist, **dadurch gekennzeichnet, dass** die Vorderseite (3) der Membrane (2) mit einem Kolben (7) in Wirkverbindung steht und dass ein Kraftgeber (10) vorhanden ist, mit dem der Kolben (7) mit einer vorbestimmten Kraft beaufschlagbar ist.

2. Drucksensor nach Anspruch 1, **dadurch gekennzeichnet, dass** der Kraftgeber (10) ein aus einer Spule (11) und einem Magneten (12) gebildeter Elektromagnet ist.

3. Drucksensor nach Anspruch 1, **dadurch gekennzeichnet, dass** der Kraftgeber (10) eine Feder ist.

**4.** Drucksensor zur Messung eines Druckes p, mit einer in einem Körper (1) eingespannten Membrane (2) mit einer Vorderseite (3) und einer Rückseite (4), wobei die Rückseite (4) der Membrane (2) mit dem Druck p beaufschlagbar ist, **dadurch gekennzeichnet, dass** die Vorderseite (3) der Membrane (2) mit einem Kolben (7) in Wirkverbindung steht und dass ein Weggeber (10) vorhanden ist, mit dem der Kolben (7) in eine vorbestimmte Lage bewegbar ist.

**5.** Drucksensor nach Anspruch 4, **dadurch gekennzeichnet, dass** der Weggeber (13) ein aus einer Spule (11) und einem Magneten (12) gebildeter Elektromagnet ist und dass eine als Anschlag für den Magneten (12) dienende Fläche (14) vorhanden ist.

**6.** Drucksensor nach Anspruch 4, **dadurch gekennzeichnet, dass** der Weggeber (13) eine Feder ist.

**Fig. 1**

**Fig. 2**

**Europäisches Patentamt**

## EUROPÄISCHER RECHERCHENBERICHT

Nummer der Anmeldung

EP 01 81 0494

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 579 504 A (HUGHES AIRCRAFT CO) 19. Januar 1994 (1994-01-19) * Anspruch 1; Abbildungen * | 1-4 | G01L27/00 G01L11/00 |

| | | | RECHERCHIERTE SACHGEBIETE (Int.Cl.7) |
|---|---|---|---|
| | | | G01L |

Der vorliegende Recherchenbericht wurde für alle Patentansprüche erstellt

| Recherchenort | Abschlußdatum der Recherche | Prüfer |
|---|---|---|
| DEN HAAG | 9. Oktober 2001 | Nobrega,R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                        EP 01 81 0494

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-10-2001

| Im Recherchenbericht angeführtes Patentdokument | Datum der Veröffentlichung | Mitglied(er) der Patentfamilie | Datum der Veröffentlichung |
|---|---|---|---|
| EP 0579504      A | 19-01-1994 | US 5317948 A | 07-06-1994 |
| | | EP 0579504 A2 | 19-01-1994 |
| | | JP 2518595 B2 | 24-07-1996 |
| | | JP 6160224 A | 07-06-1994 |

EPO FORM P0461

Für nähere Einzelheiten zu diesem Anhang : siehe Amtsblatt des Europäischen Patentamts, Nr.12/82